# EUROPEAN PATENT SPECIFICATION

(11) **EP 4 382 777 B1**
(45) Date of publication and mention of the grant of the patent: **08.07.2026**
(21) Application number: 22383186.8
(22) Date of filing: 05.12.2022
(51) Int. Cl.: F16H 59/10, F16H 59/70, F16H 59/08

(54) **DETECTION SYSTEMS AND GEARSHIFT DEVICES COMPRISING SUCH DETECTION SYSTEMS**
DETEKTIONSSYSTEME UND SCHALTVORRICHTUNGEN MIT SOLCHEN DETEKTIONSSYSTEMEN
SYSTÈMES DE DÉTECTION ET DISPOSITIFS DE CHANGEMENT DE VITESSE COMPRENANT DE TELS SYSTÈMES DE DÉTECTION

(43) Date of publication of application: 12.06.2024
(73) Proprietor: Fico Triad, S.A., 08028 Barcelona (ES)
(72) Inventor: MORENO COLOM, Javier, Viladecavalls (Barcelona) (ES)
(74) Representative: Bardehle Pagenberg S.L.

(56) References cited:
- EP-A2- 1 992 845
- EP-B1- 2 636 926
- DE-B3- 102006 021 078
- US-A1- 2008 042 644
- US-A1- 2017 284 536

## Description

### TECHNICAL FIELD

The present invention relates to detection systems for determining a position in two degrees of freedom. The present invention further relates to gearshift devices for vehicle transmissions and to vehicles comprising such gearshift devices.

### BACKGROUND

A vehicle transmission or "gearbox" is configured to transfer the power produced by an engine to the drive wheels of the vehicle. A vehicle transmission enables adjusting the gear ratio between the wheels and the engine as the vehicle slows down or speeds up. A driver of a vehicle can use a shifter device to change gears i.e. change the gear ratio between an input gear connected to the engine side and an output gear connected to the wheels side.

The gearshift device may be a shift-by-wire device. A shift-by-wire device may be configured to establish different transmission modes, e.g. driving modes such as "drive" ("D"), "park" ("P"), "reverse" ("R") or "neutral" ("N"), and transmit these electronically to a control unit. A gearshift device generally comprises a gear selector that a driver may hold and move in order to select the desired driving mode. A gear selector may be e.g. a knob or a lever.

Since the selected driving mode is transmitted electronically, no or very few mechanical connections are necessary between the gearshift device and the transmission. A "transmission mode" as used throughout the present disclosure may refer to a driving mode such as "park", "reverse", "neutral" etc. but also to the selection of a specific gear. Another position of the gearshift device may be called "home" ("H"). In general, "home" may be understood as a position to which the gear selector returns when the user releases it, e.g. a stable position to which the lever or knob returns after selecting a transmission mode in monostable gearshift devices. In some examples the "Home" position may coincide with the "park" position.

Some gearshift devices such as column and joystick gearshift devices comprise a lever configured to pivot about a pivoting axis and a sensor configured to indirectly or directly detect movements of the lever. A driver may therefore move the lever, and the sensor may detect that the position of the lever has changed. Any of these changes in position may be indicated to the vehicle control unit and/or vehicle transmission so that the vehicle may be driven according to the transmission mode signaled by the driver. In addition to a lever, gearshift devices can include user operable buttons, e.g. push-buttons, for the selection of a desirable transmission mode.

Other gearshift devices such as rotary gearshift devices comprise a knob connected to a shaft. When pushed and/or rotated, the knob acts on the shaft for changing gears. Similarly to other type of gearshift devices, a sensor may detect that the position of the shaft has changed.

The lever of a gearshift device may be configured to move along two paths or degrees of freedom. For example, the user may move the lever from "H" to "N" along a first axis and the user may move the lever from "N" to "D" or to "R" along a second axis in e.g. column or joystick gearshift devices. The first axis defined by a line "H"-"N" and the second axis defined by a line "D"-"N"-"R" may be substantially perpendicular to each other. A first axis defines a first degree of freedom, and the second axis defines a second degree of freedom of the lever. A corresponding sensor system may be configured to detect the position of the lever in two degrees of freedom.

Similarly, for rotary gearshift devices, the user may push the knob, and therefore the shaft, downwards from "H" to "N" along a first, e.g. vertical, path. And the user may rotate the knob, and therefore the shaft, from "N" to "D" or to "R" along a second path. The second path may be defined by a curve, e.g. an arc or semi-circle "D"-"N"-"R", and may lie in a plane perpendicular to the first path. The first path defines a first degree of freedom, and the second path defines a second degree of freedom. A corresponding sensor system may be configured to detect the position of the shaft in two degrees of freedom.

A sensor for detecting the position of a lever or other gear selector may be attached to an electronics support, e.g. to a printed circuit board (PCB). Some known gearshift devices comprise two printed circuit boards (PCBs) or electronics supports for detecting the transmission mode selected by a driver. One PCB may be arranged to detect movements of the user operable buttons and a second PCB may be arranged to detect movements of the lever.

Nowadays, a sensor that is often used for detecting a change in position of the gear selector is a Hall effect sensor. Other types of sensors exist. For example, contact sensors exist. However, as a contact sensor requires contact for sensing, it may wear out quickly. As a (very) large number of measurements in the gearshift device may be required during the life service of a vehicle, other types of sensors are generally used, e.g. Hall effect sensors.

A Hall effect sensor is generally capable of accurately determining the position of the gear selector and Hall effect sensors are generally also robust and have a sufficiently long service life. Such a sensor may however be expensive, even when mass-producing the sensors. Also, the associated required software may be complex, in particular for 3D Hall sensors.

An example of a gearshift device for an automotive transmission comprising a Hall sensor is provided in document EP 2 636 926 B1.

Document DE 102006021078 B3 relates to an electronic selecting lever module for generating gearshift signals for an automatic transmission of a motor vehicle. The electronic selecting lever module comprises a mechanism with an interacting rotor, a slide and a sleeve. The rotor actuates an angle sensor and the slide is guided radially on the rotor. The sleeve is connected to a lifting arm of the slide via a rotating bearing in an axis parallel to the rotor. The gear selecting lever interacts with the sleeve so that each moving component of the lever in the axial direction of the sleeve is equalized whilst the remaining movements are converted either into a rotation movement or into a sliding movement.

Document EP 1992845 A2 relates to an electronic selector lever module for generating gear shift signals for an automatic transmission of a motor vehicle. The electronic selector lever module has a mechanism for transformation of a switching lane movement of a gear selector lever into a rotary motion for an angle sensor, which is arranged on a printed circuit board. The gear selector lever is engaged in a case of the slide valve through a ball extension so that each motion component of the gear selector lever are balanced in the direction of the case without forwarding motion component. The motion components of the course selector lever lying in the level of the printed circuit board are converted into two rotation motions.

The need to simply and reliably detect a position in two degrees of freedom is not limited to the field of gearshift devices for vehicle transmissions. For example, such a detection may also be useful in game controllers and gamepads including one or more joysticks, and other implementations involving a user interface with more than one degree of freedom.

### SUMMARY

In accordance with the invention, a detection system for determining a position of a position selector along a first and a second degree of freedom according to claim 1 is provided.

A detection system is provided such that a position in two degrees of freedom, e.g. selected by a user, can be easily and reliably determined. Contact sensors are used which may be more cost effective than other available sensors, and manufacturing is facilitated by arranging the sensors substantially in the same plane of the electronics carrier. The movement of the engaging element towards or away from the electronics carrier plane allows detection of a change in position along a first degree of freedom, and the movement of the engaging element in a direction of the electronics carrier plane, or substantially parallel thereto allows detection of a change in position along a second degree of freedom.

Throughout the claimed invention, a sensor portion in movable contact with a contact sensor is understood to refer to arrangements in which a movement of the sensor portion is transferred to the contact sensor by the sensor portion indirectly or directly contacting and moving a portion of the contact sensor. A movement of the sensor portion may therefore be detected by the contact sensor.

According to the invention, the first sensor actuator and the second sensor actuator are configured to move in substantially opposite directions when the position selector is moved along the first degree of freedom. A change of position along a first degree of freedom may therefore be detected by determining that the first and second sensor actuators have moved in opposite directions, e.g. opposing rotations (clockwise/counterclockwise directions) or opposing translations (e.g. right/left directions).

In some examples, the engaging element may comprise a stepped portion for moving the first sensor actuator and the second sensor actuator in a direction parallel to the electronics carrier plane when the engaging element moves towards or away the electronics carrier plane. The stepped portion may facilitate moving the engaging element between the first and second sensor actuators and to cause the first and second sensor actuators to move in opposite directions. In other examples, the first and second sensor actuators may be the ones having a stepped portion. Still in other examples, the engaging element and/or the first and second sensor actuators may be configured differently. For example, the engaging element may have a conical shape for separating the first and second sensor actuators.

In some examples, the first sensor actuator and the second sensor actuator may be configured to move in a same direction when the position selector is moved along the second degree of freedom.

The first contact sensor and the second contact sensor may be at a same side of the electronics carrier in some examples. The first and second contact sensors may be aligned on the electronics carrier. For example, a distance from the first and second contact sensors to an edge of the electronics carrier may be the same. Similarly, the first and second contact sensors may be at opposite sides of the electronics carrier in other examples. The first and second contact sensors may be aligned, e.g. the first and second contact sensor may be facing each other.

A biasing element may be provided between the first sensor actuator and the second sensor actuator for biasing the first sensor actuator and the second sensor actuator towards the engaging element in some examples. This may allow to move the first and second sensor actuators together.

In some examples, the first contact sensor and the second contact sensor may be potentiometers, e.g. rotary potentiometers or linear potentiometers. A reliable, simple and robust detection may be performed with such contact sensors.

According to a further aspect, a non-claimed device comprising a detection system as described herein is provided. The device further comprises a position selector coupled to the engaging portion of the detection system for selecting a position along two degrees of freedom. According to the present invention, the claimed device is a gearshift device for a vehicle transmission. The position selector is a gear selector operable by a user to control a vehicle transmission. Other non-claimed devices including a detection system as described throughout this disclosure are also possible.

According to a further aspect of the present invention, a vehicle according to claim 14 is provided.

### BRIEF DESCRIPTION OF THE DRAWINGS

Non-limiting examples of the present invention will be described in the following, with reference to the appended figures, in which:
Figures 1A and 1B schematically illustrate a perspective outer view of a portion of an example of a device for detecting a position of a position selector along two degrees of freedom.
Figure 1C schematically illustrates an exploded view of the portion of the device of figures 1A and 1B.
Figures 1D, 1E and 1F schematically illustrate a rear view, a lateral view and a top view respectively of the portion of the device of figures 1A - 1C.
Figures 2A and 2B schematically illustrate cross-sectional views along the line A-A of figure 1D. In particular, in these examples figure 2A illustrates a first position and figure 2B illustrates a second position. Figure 2C schematically illustrates drive modes as they may be depicted on a gearshift device of a vehicle according to an example.
Figures 3A - 3D schematically illustrate cross-sectional views along the line B-B of figure 1F. In particular, in these examples figure 3A illustrates a first position, figure 3B illustrates a second position, figure 3C illustrates a third position and figure 3D illustrates a fourth position.
Figures 4A - 4C schematically illustrate cross-sectional views along the line D-D of figure 1E. In particular, in these examples figure 4A illustrates a second position, figure 4B illustrates a third position and figure 4C illustrates a fourth position.
Figure 5 schematically illustrates an example of a detection system for determining a position in two degrees of freedom.
Figure 6 schematically illustrates an example of the angles that the contact sensors of the gearshift device of figures 1A - 4C may detect in the different transmission modes.
Figures 7A - 7F schematically illustrate a further example of a portion of a device for detecting a position along two degrees of freedom. In particular figures 6A and 6B show two perspective views, and figures 6C - 6F respectively show examples of the detection of first, second, third and fourth positions.
Figures 8A and 8B schematically illustrate two different examples of types of gear selectors for a gearshift device which may be used in combination with examples of the detection systems disclosed herein.
Figures 9A - 9F schematically illustrate a further example of a portion of a device for determining a position in two degrees of freedom. In particular figures 9A and 9B show an exploded and an assembled perspective view of an inside of a gearshift, respectively, and figures 9C - 9F respectively show examples of the detection of first, second, third and fourth positions in a perspective view.
Figures 10A - 10D schematically illustrate a further example of a detection system. These figures respectively show examples of the detection of first, second, third and fourth positions.
Figures 11A and 11B schematically illustrate an example of a rotary gearshift device.

The figures refer to example implementations and are only be used as an aid for understanding the claimed subject matter, not for limiting it in any sense.

### DETAILED DESCRIPTION OF EXAMPLES

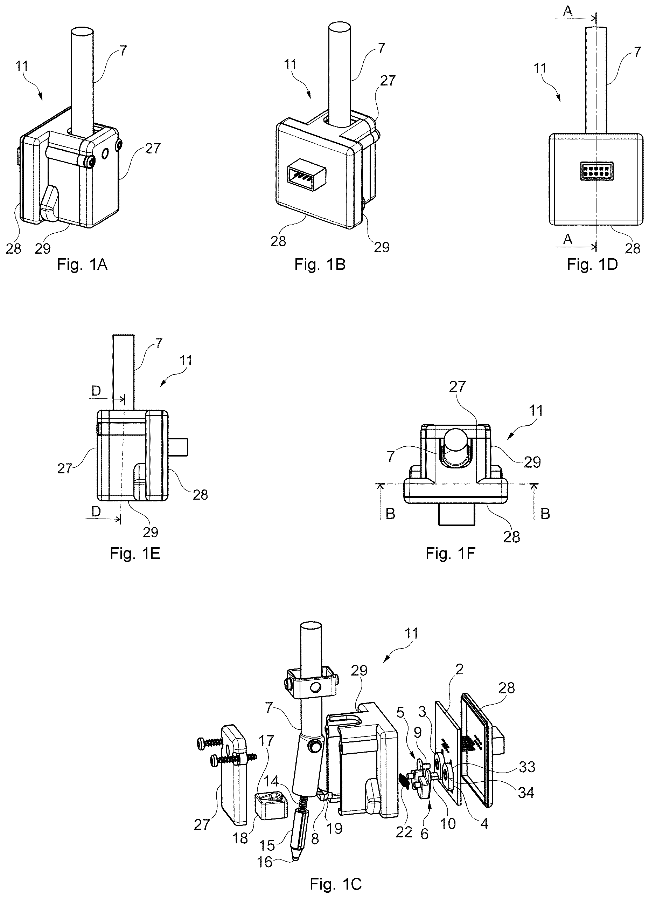

With reference for illustrative purposes to the example of figures 1 - 4, in a first aspect, a detection system 1 for determining a position of a position selector 7 along a first and a second degree of freedom is provided.

The detection system 1 comprises (see at least figure 1C) at least one electronics carrier 2 defining an electronics carrier plane, a first contact sensor 3, a second contact sensor 4, a first sensor actuator 5, a second sensor actuator 6 and an engaging element 8. The first contact sensor 3 and the second contact sensor 4 are attached to the at least one electronics carrier 2. In this particular example, a single electronics carrier, and more particularly a single Printed Circuit Board (PCB) is provided.

The first sensor actuator 5 comprises a sensor portion 9 in movable contact with the first contact sensor 3. The second sensor actuator 6 comprises a sensor portion 10 in movable contact with the second contact sensor 4. The engaging element 8 is configured to be connected to a position selector 7 and is configured to move towards, and away from, the electronics carrier plane and to move the first sensor actuator 5 and the second sensor actuator 6 in a direction parallel to the electronics carrier plane to detect a change of position of the position selector 7 along the first degree of freedom.

The engaging element 8 is further configured to move in a direction parallel to the electronics carrier plane and to move the first sensor actuator 5 and the second sensor actuator 6 in a direction parallel to the electronics carrier plane to detect a change of position of the position selector 7 along the second degree of freedom.

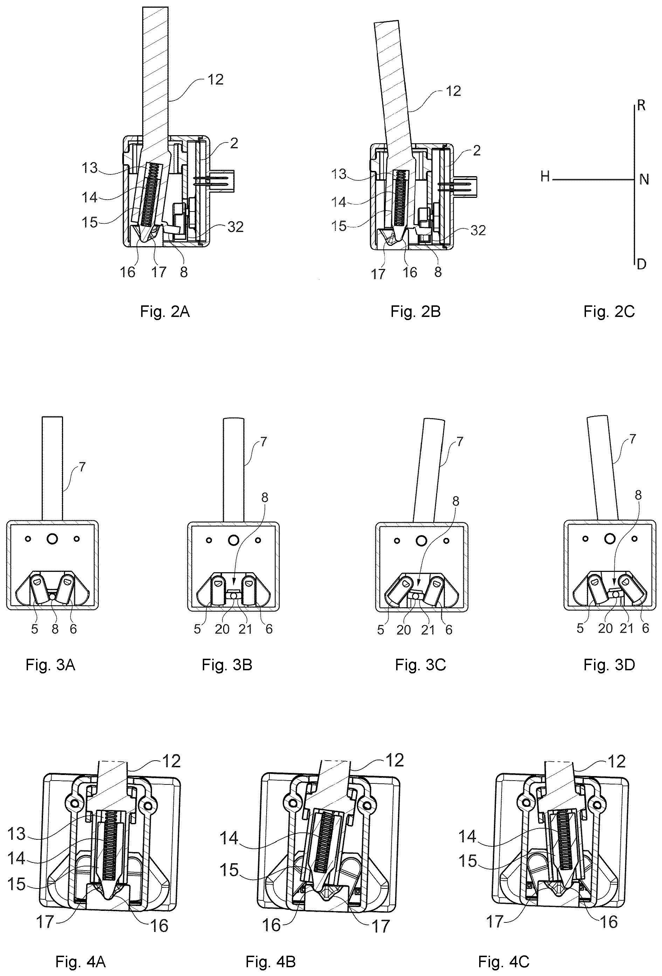

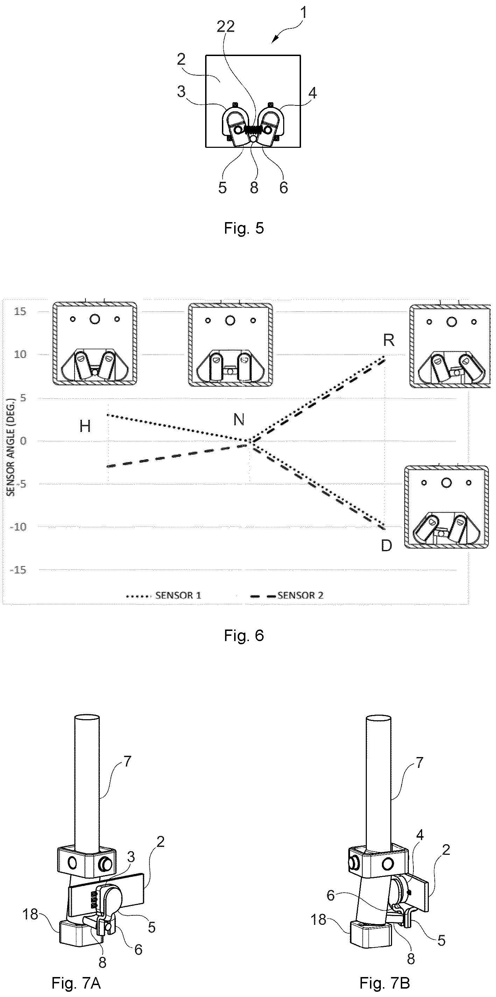

Figures 1A - 1F show different view of an example of a portion of a device 11 such as a gearshift device for a vehicle transmission. Figures 2A - 4C show different cross-sectional views of the portion of the device 11 of figures 1A - 1F. The device 11 comprises a detection system 1 for determining a position in two degrees of freedom as described herein. An example of detection system 1 which is used in the example of figures 1A - 4C is illustrated in figure 5.

In the example of figures 1A - 4C, the position selector 7 may be a gear selector of a gearshift device 11, and in particular a lever. A gear selector may be understood as an element that a user such as a driver can use to select a suitable gear or transmission mode. In order to properly control the vehicle and change the transmission mode in accordance with the driver's request, the position of the lever 7 inside the gearshift device needs to be accurately and reliably detected.

The lever 7 in this example may be moved along two degrees of freedom by a user, in particular the driver of a vehicle. In this example, the lever 7 may be configured to be moved forwards and backwards (one degree of freedom), and in at least one position along the forward backward direction, the lever 7 may be moved sideways (another degree of freedom).

In the examples disclosed herein, the position of the lever 7 may be indirectly detected. In the example of figures 1A - 4C, the lever 7 comprises an engaging element 8 which may act on two sensor actuators 5, 6, see e.g. figures 3A - 3D, and the orientation, movement or position of the sensor actuators 5, 6 is then determined, which then provides information on the position of the lever 7 position and therefore on the driver's gear selection. In other examples, a gear (or in general a position) selector 7 different from a lever may be used.

In the example of figures 1A - 4C, the position selector 7 comprises a shaft 12 with a protrusion being the engaging element 8. In this particular example, the engaging element 8 may be integrally formed with the shaft of the position selector 7.

The shaft 12 comprises an inner channel 13 including a spring 14 and a plunger 15 arranged over the spring 14, at least partially surrounding the spring 14. In particular, the shaft 12 has a lower end, e.g. a cylindrical recess 13 configured to receive the spring 14. The plunger 15 has a tip portion 16, e.g. a rounded tip portion, configured to interact with an undulated surface 17.

In the example of figures 1A - 4C, the undulated surface 17 is provided as an upper surface of insert 18. In other examples, the undulated surface 17 may be provided in an inner portion of the casing or in any other suitable location. Likewise, although in the example of figures 1A - 4C, the engaging element 8 is integrally formed with the position selector 7, the engaging element 8 may be a separate element from the position selector 7 in other examples. The engaging element 8 may e.g. be mechanically fixed to the position selector 7 in some other examples.

The lever 7 or other suitable position selector operated by a user interacts with the undulated surface 17 of the insert 18 defining one or more stable positions for the lever 7, e.g. through alternating valleys and peaks, see figures 2A - 2B and 4A - 4C. The stable positions, i.e. the valleys of the undulated surface 17, may correspond to the different positions such as transmission modes or gears that a user may select.

The spring 14 may aid the user in selecting a position by making a transition from a stable (valley) to unstable (peak, mountain) position smoother, and facilitating the selection of the stable positions (valleys). Herein it may be understood that a stable position refers to a valley of the undulated surface 17 whereas an unstable position refers to a peak or mountain of the undulated surface 17. In some examples, a single stable position may be defined in the surface 17 so that the lever 7 (or other gear selector) always returns to that stable position when the driver releases the lever.

In a specific example, a lever 7 may have two degrees of freedom which are substantially perpendicular to each other, and which together for a " 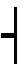 " shape, i.e. similar to a "T" which has been rotated 90°, and in particular rotated to the right. Figure 2C schematically illustrates drive modes as they may be depicted on a gearshift device of a vehicle according to an example. It is noted that figures 2A and 2B are cross-sectional views from the front of the gearshift device, i.e. looking from the "R" position towards the "D" position.

In these examples, a movement of a user along the horizontal line of the " 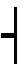 " may represent a movement in a first degree of freedom and a movement of the user along the vertical line of the " 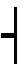 " may represent a movement in a second degree of freedom. The first degree of freedom, when the gearshift device has been mounted in the vehicle, may correspond substantially to a translation or rotation along a transverse direction of the vehicle (left/right), whereas the second degree of freedom may correspond substantially to a translation or rotation along a longitudinal direction of the vehicle (forward/backward).

A first position such as the "H" ("home", e.g. "park" in some examples) position may be at the left end of the horizontal line of the " 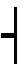 "; and a second position such the "N" ("neutral") position may be at the right end at the horizontal line of the " 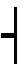 ", respectively, see figure 2C. And a third position such as the "R" ("reverse") position and a fourth position such as the "D" ("drive") position may be at the opposite ends of the vertical line of the " 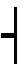 ", see figure 2C. The "D" position may e.g. be at the bottom end of the vertical line of the " 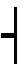 ", whereas the "R" position may be at the top end of the vertical line of the " 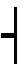 ". This is just an illustrative example, and other positions or transmission modes may be defined in other examples. In some examples, various stable positions (valleys) may be defined for the "H", "N", "D" and "R" transmission modes. In other examples, a monostable gearshift device may be provided, wherein a single stable position is defined e.g. at the Home position.

The engaging element 8 comprises a stepped portion 19 which allows moving the first sensor actuator 5 and the second sensor actuator 6 in a direction parallel the electronics carrier plane when the engaging element 8 moves towards, or away from, the electronics carrier plane in the example of figures 1A - 1F.

The stepped portion 19 may be formed as a change in cross-sectional dimensions of the engaging element 8. The stepped portion may comprise a first part 20 with a small diameter and a second part 21 with a greater diameter. A tapering portion between the first part 20 and the second part 21 may be provided.

In this way, see figures 2A and 3A, the first part 20 lies between the first sensor actuator 5 and the second sensor actuator 6 in the first position, e.g. the "H" position. The first sensor actuator 5 and the second sensor actuator 6 touch the first part 20.

A biasing element 22 between the first sensor actuator 5 and the second sensor actuator 6 biases the first sensor actuator 5 and the second sensor actuator 6 towards the engaging element 8. A biasing element 22 may be a spring in some examples. Although the biasing element 22 is not shown in figures 3A - 3D, it is to be understood that it is present in these figures. A suitable arrangement for a biasing element 22 may also be seen in figure 5. One end of the biasing element 22 is attached to the first sensor actuator 5, and the opposite end of the biasing element 22 is attached to the second sensor actuator 6.

The first sensor actuator 5 and the second sensor actuator 6 may be configured to move in opposite directions to transition between a first position and a second position along the first degree of freedom. When a user moves the lever 7 from the first position to a second position, e.g. from "H" to "N", along a first degree of freedom, see figures 2B, 3B and 4A, the tip portion 16 of the plunger 15 moves along undulated surface 17.

With the movement of the lever 7, the second part 21 of increased diameter of the stepped portion of the engaging element 8 moves towards the electronics carrier 2 and in between the first sensor actuator 5 and the second sensor actuator 6 thus pushing against the first and second sensor actuators 5, 6. The first 5 and second 6 sensor actuators rotate within a plane which is parallel to the electronics carrier plane, and do so in opposite directions. The ends of the sensor actuators 5, 6 that are in contact with the engaging element 8 thus become more separated. As the first 5 and second 6 sensor actuators are movably connected with the first 3 and second 4 contact sensors, the first contact sensor 3 detects the movement of the first sensor actuator 5, and the second contact sensor 4 detects the movement of the second sensor actuator 6. The "N" position can therefore be detected.

The first contact sensor 3 and the second contact sensor 4 are potentiometers in the example of figures 1A - 5. In particular, they are rotary potentiometers. The first 5 and second 6 sensor actuators are configured to be moved by the engaging element 8 such that they rotate about an axis of the corresponding sensor portion 9, 10 when the position selector 7 is operated by a user. The axes of rotation of the first 9 and second 10 sensor portions are perpendicular to the plane of the electronics carrier 4, see e.g. figures 1C and 5. Each of the sensors 3, 4 may include a fixed portion 33 with an opening and a movable portion 34 configured to rotate in the opening.

The sensor portion 9 of the first sensor actuator 5 is at least partially arranged within the opening of the first contact sensor 3, is adapted to the shape of the opening of the first contact sensor 3 and is configured to rotate within this opening. The sensor portion 9 of the first sensor actuator 5 may for example comprise a contact portion that is configured to engage a surface of the movable portion 34 of the first contact sensor 3, and therefore to move the movable portion 34 when the sensor portion 9 rotates. The movement of the engaging element 8, and therefore of the position selector 7, can be detected in the rotary potentiometer. This structural and functional explanation likewise applies to the second sensor actuator 6 and the second contact sensor 4.

The first sensor actuator 5 and the second sensor actuator 6 may be configured to move in a same lateral direction to transition from the second position, e.g. the "N" position, to a third position, e.g. the "R" position, when the position selector 7 is moved along the second degree of freedom. From the "N" position (or passing through the "N" position), the user may select the "R" position, see figures 3D and 4B. When a user moves the lever 7 from "N" to "R" along a second degree of freedom, the tip portion 16 of the plunger 15 moves along the surface 17. For the driver, this will correspond to moving the lever substantially along the driving direction.

With the movement of the lever 7, the first sensor actuator 5 and the second sensor actuator 6 are moved in a direction parallel to the electronics carrier plane, see figure 3C. In this example, the first 5 and second 6 sensor actuators rotate within a plane which is parallel to the electronics carrier plane. The first 5 and second 6 sensor actuators rotate in the same direction. Again, as the first 5 and second 6 sensor actuators are movably connected with the first 3 and second 4 contact sensors through the corresponding sensor portions 9, 10, the first contact sensor 3 detects the movement of the first sensor actuator 5, and the second contact sensor 4 detects the movement of the second sensor actuator 6. The third position, e.g. the "R" position, can therefore be detected.

The first sensor actuator 5 and the second sensor actuator 6 may be configured to move in a same direction, opposite to the just described direction, to transition from the second position, e.g. the "N" position, to a fourth position, e.g. the "D" position. The fourth position is opposite the third position along the second degree of freedom. From the "N" position (or passing through the "N" position), the user may select the "D" position, see figures 3C and 4C. When a user moves the lever 7 from "N" to "D" along the second degree of freedom, the tip portion 16 of the plunger 15 moves along surface 17.

With the movement of the lever 7, the first sensor actuator 5 and the second sensor actuator 6 are moved in a direction parallel to the electronics carrier plane, see figure 3C. The first 5 and second 6 sensor actuators rotate within a plane which is parallel to the electronics carrier plane. The first 5 and second 6 sensor actuators rotate in the same direction in this case. As the first 5 and second 6 sensor actuators are movably connected with the first 3 and second 4 contact sensors through the corresponding sensor portions 9, 10, the first contact sensor 3 detects the movement of the first sensor actuator 5, and the second contact sensor 4 detects the movement of the second sensor actuator 6. The fourth position, e.g. the "D" position, can therefore be detected.

As may be seen in figures 3C and 3D, the rotation of the first 5 and second 6 sensor actuators from the "N" position to the "D" position is in the opposite direction from the rotation of the first 5 and second 6 sensor actuators from the "N" position to the "R" position. By operating the position selector 7 as described with respect to figures 2A - 4C, a position may be accurately detected in an easy manner with a simple and reliable detection system 1.

The contact sensors 3, 4 may provide as output a pair of values directly or indirectly indicative of a position (each sensor provides a value of the pair of values). I.e., each of the first to the fourth position may be indicated by a pair of values. The values, e.g. angles, to be measured and to be indicative of a position may be selected as appropriate.

Figure 6 schematically illustrates an example of the angles that the contact sensors 3, 4 of the gearshift device 11 of figures 1A - 4C may detect in the different transmission modes. The dotted line refers to the first (left) contact sensor 3 and the dashed line refers to the second (right) contact sensor 4.

In examples wherein a rotary potentiometer is used, the engaging element 8 and the first 5 and second 6 sensor actuators may be configured and arranged such that the first 3 and second 4 contact sensors measure 0 ° (degrees) in the "N" position, see figure 6. For example, the first 3 and second 4 contact sensors may measure 0 ° in the example of figure 3B. Similarly, the first 3 and second 4 contact sensors may measure between 0 ° and 3 ° in absolute value in the "H" position; e.g. the first contact sensor 3 may measure -1 °, -2 °, or -3 °, and the second contact sensor 4 may measure, respectively, +1 °, +2 ° or +3 °.

And the first 3 and second 4 contact sensor may measure between -3 ° and - 12 ° in the "D" position, and between +3 ° and +12 ° in the "R" position. For example, each of the first 3 and second 4 contact sensors may measure +8 °, +9 ° or +10 ° in the "R" position; and each of the first 3 and second 4 contact sensor may respectively measure -8 °, -9 ° or -10 ° in the "D" position. It will be clear that the use of negative and positive numbers is only a matter of convention and might easily be changed, e.g. a D position might correspond to a positive value for both sensors, and an R position might correspond to a negative value for both sensors.

In other words, the absolute values indicative of the fourth position, e.g. the "D" position, and of the third position, e.g. the "R" position, may be the same and may be greater than the absolute values indicative of the first position, e.g. the "H" position. And the absolute values indicative of the first position may be greater than the absolute values indicative of the second position, e.g. the "N" position.

The value of the angles indicated by the contact sensors 3, 4 and their evolution may help to determine a correct transmission mode even if one of the contact sensors 3, 4 or one of the sensor actuators 5, 6 fails. The value and the evolution of the angles measured by a particular contact sensor may help to discern a location of the tip portion 16 of the selector 7 on the undulated surface 17. For example, if the second contact sensor 4 fails (no dashed line in figure 6), the values and the evolution of the angles measured by the first contact sensor 3 (dotted line in figure 6) may indicate that the movement is from "H" to "N" if the value of the angle decreases e.g. from +3 ° to +1 °, or that the movement is from "N" to "R" if the value of the angle increases e.g. from +8 ° to + 10 °.

The first contact sensor 3 and the second contact sensor 4 are at a same side of the electronics carrier 2 in the example of figures 1A - 4C. But in other examples, the first contact sensor 3 and the second contact sensor 4 may be at opposite sides, e.g. at opposite faces, of the electronics carrier 2. One of these examples is schematically shown in figures 7A - 7F, which show different views of a portion of a gearshift device 11 comprising a detection system 1 as described throughout this disclosure.

The way in which the detection of a position in two degrees of freedom is performed is substantially the same as in the examples of figures 1A - 4C. Although not shown in figures 7A - 7F, a biasing element 22 such as a spring may connect the first 5 and second 6 sensor actuators similarly to figures 1C and 5. In some examples, the biasing element 22 may be provided between the free ends of the first 5 and second 6 sensor actuators.

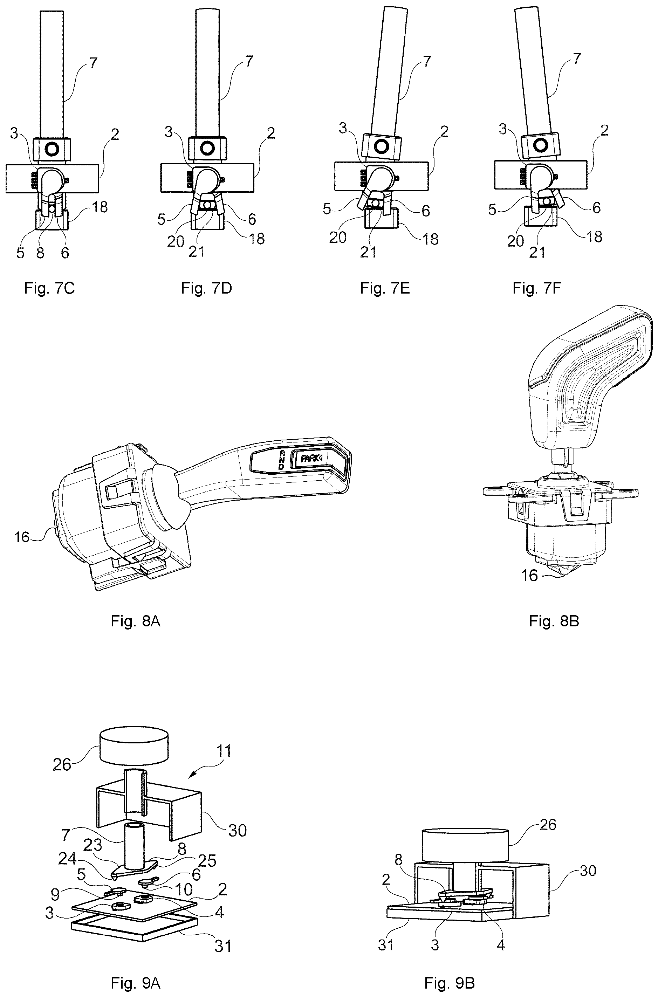

Going from the first, e.g. "H", to the second, e.g. "N", position causes the engaging element 8 to separate the first 5 and second 6 sensor actuators, i.e. causes each of the sensor actuators, e.g. their free ends, to rotate in opposite directions in a direction of the electronics carrier plane, see figure 7C and 7D. The engaging element 8 may have a stepped portion 19 as described before to this end. An outer part 20 of the stepped portion 19 of smaller diameter separates the first 5 and second 6 actuators in the "H" position, see figure 7C, whereas an inner part 21 of the stepped portion 19 of bigger diameter separates the first 5 and second actuators in the "N" position, see figure 7D.

Going from the second, e.g. "N", to the third, e.g. "R", position or form the second, e.g. "N", to the fourth, e.g. "D", position causes the first 5 and second 6 contact sensors to rotate together in a first and a second opposite directions respectively, see figures 7E and 7F. In the view of figure 7E, there has been a clockwise rotation of the sensor actuators 5, 6 for going from the "N" to the "D" position; and in the view of figure 7F, there has been a counterclockwise rotation of the contact sensors 5, 6 for transitioning from the "N" to the "R" position. The rotation of the corresponding sensor portions 9, 10 inside the contact sensors 3, 4 enables determining a position, e.g. "H", "N", "D" or "R", as explained before.

Although in the examples of figures 1A - 4C and 7A - 7F the engaging element 8 has a stepped portion 19 which allows moving the first sensor actuator 5 and the second sensor actuator 6 in a direction of the electronics carrier plane, a stepped portion 19 may be omitted in the engaging element 8. For example, it may be the first sensor actuator 5 and the second sensor actuator 6 which each comprise a stepped portion whereas the engaging element 8 is straight, i.e. not stepped. The first 5 and second 6 actuator may therefore have suitable recesses to this end in some examples.

Figures 8A and 8B schematically illustrate two different examples of types of position selectors 7 which may be used in a device 11 such as a gearshift device in conjunction with a detection system 1 as described herein, e.g. as described with respect to figures 1A - 6F. Figure 8A shows a column-type gearshift device and figure 8B shows a joystick-type gearshift device. Both types of position selectors 7 may include a tip portion 16 configured to interact with an undulated surface 17 having one or more stable positions, e.g. valleys, and unstable positions, e.g. peaks. The position selectors 7 may include or may be coupled to a knob 26 which a driver may hold or manipulate to change a transmission mode. In yet other examples, other gear selectors instead of levers may be used.

Figures 9A - 9F schematically illustrate another example of a device 11, e.g. a gearshift device for a vehicle transmission. This example shows a rotary device. Similarly to the examples of figures 1A - 4C, an engaging element 8 is configured to move towards, and away from, the electronics carrier plane and move the first sensor actuator 5 and the second sensor actuator 6 in a direction parallel to the electronics carrier plane to detect a change of position in a first degree of freedom. The engaging element 8 is also configured to move in a direction of the electronics carrier plane and to move the first sensor actuator 5 and the second sensor actuator 6 in a direction of the electronics carrier plane to detect a change of position in a second degree of freedom as explained below.

The engaging element 8 of the example of figures 9A - 9F comprises a base 23 and two protrusions 24, 25 extending from base 23. In this example, the base 23 is an elongated element which is parallel to a bottom end of the position selector 7, see figure 9A. A first protrusion 24 and a second protrusion 25 are arranged at opposite ends of the base 23 in this example. The protrusions 24, 25 may have a triangular, conical or pyramidal shape in some examples. Other suitable shapes of the protrusions are also possible. In particular, the protrusions may have a tapering cross-section.

The engaging element 8 may be configured such that the first 5 and second 6 sensor actuators may be moved in a same direction as well as in opposite directions. In some examples, the base 23 may be provided in more than one piece. Other designs may be used. For example, the first 24 and second 25 protrusions may be movable along a track of a suitably shaped base 23.

In the example of figures 9A - 9F, a movement along a first straight line, e.g. a vertical line, defines a movement along a first degree of freedom. The straight line may e.g. connect the "H" and "N" positions. A movement along a second curved line in a plane perpendicular to the first line, for example an arc (e.g. part of a circle, or semicircle) defines a movement along a second degree of freedom. The arc may e.g. connect the "R", "N" and "D" positions.

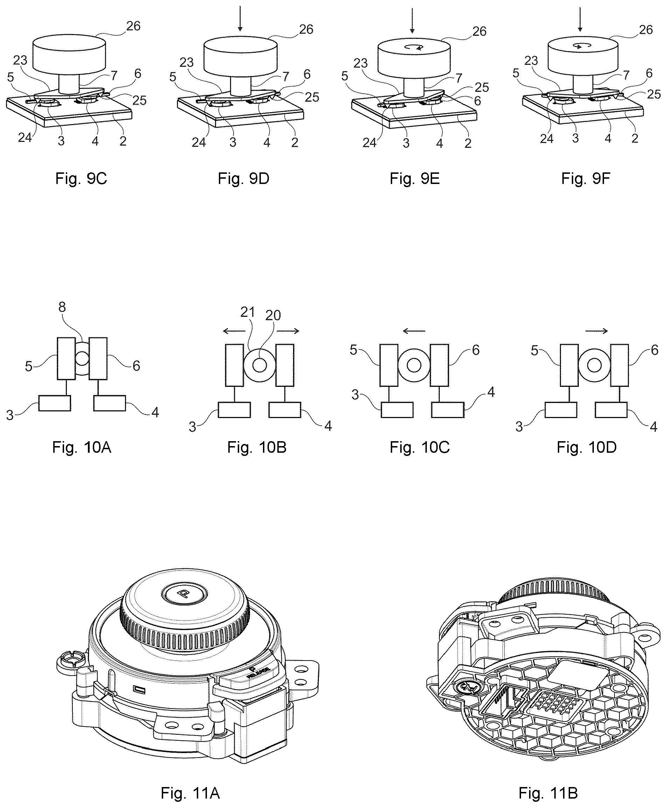

For transitioning from the first position, e.g. the "H" position, see figure 9C, to the second position, e.g. the "N" position, see figure 9D, a user may for example push the position selector 7 downwards. The gearshift device 11 may have a knob 26 or any other suitable piece or element which may be pushed or pressed. The engaging element 8 is therefore pushed too, and the engaging element 8 moves the first 5 and second 6 sensor actuators in opposite directions through engagement of the protrusions 24, 25 with the first and second sensor actuators 5, 6. I.e., the first 5 and second 6 sensor actuators may be both rotated in a plane parallel to the electronics carrier plane. The first sensor actuator 5 may e.g. be rotated in a clockwise direction, and the second sensor actuator 6 may e.g. be rotated in a counterclockwise direction, see figure 9D. Sensor portions 9, 10 of the sensor actuators 5, 6 may rotate within the first 3 and second 4 contact sensors, and the "N" position may be detected.

From the second position, e.g. the "N" position, or passing through the second position, the position selector 7 may be rotated, e.g. clockwise. This causes the first 24 and second 25 protrusions of the engaging element 8 to move clockwise, and therefore to move the first 5 and second 6 sensor actuators, e.g. a distal free end thereof, also clockwise. This rotation is transmitted to the first 3 and second 4 contact sensors, which can then detect the third position, e.g. the "R" position, in the example of figure 9E.

Finally, from the second position, e.g. the "N" position, or passing through the second position, the position selector 7 may be rotated, e.g. counterclockwise. This causes the first 24 and second 25 protrusions of the engaging element 8 to move counterclockwise, and therefore to move the first 5 and second 6 sensor actuators, e.g. a free distal end thereof, also counterclockwise. This rotation is transmitted to the first 3 and second 4 contact sensors, which can then detect the fourth, e.g. the "D", position in the example of figure 9F.

Similarly to the examples of figures 1A - 7F, the angles representative of each position, e.g. "H", "N", "R" and "D" may be selected as desired. In examples wherein a rotary potentiometer is used, the engaging element 8 and the first 5 and second 6 sensor actuators may be configured and arranged such that the first 3 and second 4 contact sensors measure 0 ° (degrees) in the second, e.g. "N", position. For example, the first 3 and second 4 contact sensors may measure 0 ° in the example of figure 9D.

Although the examples of figures 1A - 9F show a rotary potentiometer, other types of contact sensors 3, 4 may be used. For example, linear potentiometers may be used. A schematic example of a detection system 1 using linear potentiometers 3, 4 is illustrated in figures 10A - 10D. The view in figures 10A - 10D is similar to the view shown in figures 3A - 3D. The electronics carrier 2 is therefore not depicted in figures 10A - 10D, but it should be understood that it is parallel to the plane of these figures and that the contact sensors 3, 4 are attached to the electronics carrier.

The detection system of figures 10A - 10D works in a similar manner as the detection system of figures 1A - 6. Starting in a first, e.g. "H" position, see figure 10A, moving a position selector 7 caused an inner part 21 of a stepped portion 19 of the engaging element 8 to separate the first 5 and second 6 sensor actuators in opposite directions in a plane parallel to the electronics carrier plane and transition to the second, e.g. "N" position, see figure 10B. From the second position, see figure 10B, moving the position sensor 7 to the left or to the right causes the transition to a third, e.g. "R", and a fourth, e.g. "D", position, see figures 10C and 10D. The movements of the wipers of the linear potentiometers 3, 4 allow to detect whether an "H", "N", "R" or "D" position has been selected.

Like with the angles of the rotary potentiometers indicative of each position in the examples of figures 1A - 9F, the positions or distances of the linear potentiometers representing each position, e.g. "H", "N", "R" and "D", may be selected as desired. Again, the "N" position may be indicated by a "zero" position, e.g. a value z = 0. The "H" position may be indicated by a "-x, +x" pair of values, the "R" position may be indicated by a "+y, +y" pair of values, and the "D" position may be indicated by a "-y, -y" pair of values It should be understood that this is just an illustrative example and that other ways of arranging the values indicative of each position are possible.

In the examples of figures 1A - 10D, the electronics carrier 2 is a printed circuit board (PCB). In other examples, the electronics carrier 2 may be different from a PCB. In some examples, the electronics carrier may be two or more PCBs, e.g. two consecutive PCBs forming a single electronics carrier plane.

It should also be noted that although the detection of four positions has been explained herein, a different number of positions, e.g. more than four positions, may be detected with a detection system 1 as described herein. For example, the engaging element 8 may have additional steps for identifying additional positions along a first degree of freedom. And more positions, e.g. angles, may be defined as indicative of additional positions along a second degree of freedom.

In all disclosed examples, the contact sensor was a potentiometer. It should be noted however that other contact sensors may also be used. For example, resistive tracks in electrical contact with brushes may also be used.

In a further aspect, a a non-claimed device 11 comprising a detection system 1 as described herein is provided. The device 11 comprises a position selector 7 coupled to the engaging portion 8 of the detection system 1. In some examples, the position selector 7 may include the engaging portion 8. For instance, the engaging portion 8 may be integrally formed with the position selector 7. In other examples, the position selector 7 may include the engaging portion 8, but the engaging portion 8 may be a separate element or piece from the position selector 7. In some of these examples, the engaging portion 8 may be attached to the position selector 7 through at least one of a mechanical connection, an adhesive connection or snap-fitting or press-fitting.

The position selector 7 may be a lever, shaft, a stick or other element suitable for selecting a position in two degrees of freedom as disclosed herein.

The device may comprise a suitable housing for protecting the detection system 1. The housing may accommodate and protect e.g. electronics, sensor components and other. The housing may for example accommodate part of the position selector 7, the engaging element 8, an electronics support 2, the first 3 and second 4 sensors, and the first 5 and second 6 sensor actuators.

In some examples, the housing may comprise a front cover 27, a rear cover 28 and a lateral cover 29, see figures 1A - 1F. The lateral cover 29 may be configured to be snap-fitted with the rear cover 28, and the front 27 and lateral 29 covers may be configured to be mechanically joined in some examples. The lateral cover 29, or in general any suitable cover, may have one or more protruding portions 32 for avoiding flexion of the first 5 and second 6 sensor actuators, see figures 2A and 2B.

In other examples, the housing may comprise a top cover 30 and a bottom cover 31, see figures 9A and 9B. The top cover 30 and the bottom cover 31 may be configured to be snap-fitted in some examples. In general, a device comprising a detection system 1 as described herein may include any suitable type of housing.

According to the present invention, the claimed device 11 is a gearshift device for a vehicle transmission. The position selector 7 is a gear selector operable by a user to control a vehicle transmission. Some gearshift devices which may include a detection system 1 as described herein are column type and joystick type gearshift devices. A rotary gearshift device 11, an example of which is schematically illustrated in figures 11A and 11B, may also comprise such a detection system 1.

As explained before, the first 5 and second 6 sensor actuators may be configured to move, e.g. rotate, in opposite directions to transition between an "H" and an "N" position. Likewise, the first 5 and second 6 sensor actuators may be configured to move, e.g. rotate, in a same direction to transition between an "N" position and an "R" or an "D" position.

In some examples, the gearshift device 11 may be configured to use the values and the evolution with time of the angles measured by one of the first 3 and second 4 contact sensors when the other one of the first 3 and second 4 contact sensors fails. As explained previously, this may help to discern a transmission mode. For example, the gearshift device may be configured to determine a position of the gear selector based at least partially on an evolution of the position of the gear selector determined by one of the first 3 and second 4 contact sensors over time in case the other of the first 3 and second 4 contact sensors fails.

In other non-claimed examples, the device 11 may be a game controller or a gamepad, e.g. including one or more joysticks. Other type of non-claimed device including a detection system 1 as described herein may also be possible.

In a further aspect of the present invention, a vehicle comprising a gearshift device as described herein for the vehicle transmission is also provided.

Although only a number of examples have been disclosed herein, other examples, which fall under wording of the appended claims, are possible. Thus, the scope of the present invention should not be limited by particular examples, but should be determined only by a fair reading of the claims that follow.

## Claims

1. A detection system (1) for determining a position of a position selector (7) along a first and a second degree of freedom comprising:
at least one electronics carrier (2), the at least one electronics carrier (2) defining an electronics carrier plane;
a first contact sensor (3) and a second contact sensor (4) attached to the at least one electronics carrier (2);
a first sensor actuator (5) comprising a sensor portion (9) in movable contact with the first contact sensor (3) such that a movement of the sensor portion (9) is transferred to the first contact sensor (3) by the sensor portion (9) of the first sensor actuator (5) directly or indirectly contacting and moving a portion of the first contact sensor (3);
a second sensor actuator (6) having a sensor portion (10) in movable contact with the second contact sensor (4) such that a movement of the sensor portion (10) of the second actuator (6) is transferred to the second contact sensor (4) by the sensor portion (10) of the second actuator (6) directly or indirectly contacting and moving a portion of the second contact sensor (4); and
an engaging element (8) configured to be connected to the position selector (7) and configured to:
move towards and away from the electronics carrier plane and move the first sensor actuator (5) and the second sensor actuator (6) substantially parallel to the electronics carrier plane such that a change of position of the position selector (7) along the first degree of freedom can be detected; and further configured to
move in a direction parallel to the electronics carrier plane and move the first sensor actuator (5) and the second sensor actuator (6) substantially parallel to the electronics carrier plane such that a change of position of the position selector (7) along the second degree of freedom can be detected; and
wherein the engaging element is configured to move the first sensor actuator (5) and the second sensor actuator (6) in opposite directions when the position selector (7) is moved along the first degree of freedom.

2. The detection system of claim 1, wherein the engaging element (8) comprises a stepped portion (19) configured to engage with the first sensor actuator (5) and the second sensor actuator (6) in a direction of the electronics carrier plane when the engaging element (8) moves towards or away the electronics carrier plane.

3. The detection system of claim 1, wherein the first sensor actuator (5) and the second sensor actuator (6) comprise a stepped portion configured to be engaged by the engaging element (8) for moving the first sensor actuator (5) and the second sensor actuator (6) in a direction of the electronics carrier plane when the engaging element (8) is moved towards or away from the electronics carrier plane.

4. The detection system of any of claims 1 - 3, wherein the engaging element (8) is configured to move the first sensor actuator (5) and the second sensor actuator (6) in a same direction when the position selector (7) is moved along the second degree of freedom.

5. The detection system of any of claims 1 - 4, wherein the first contact sensor (3) and the second contact sensor (4) are attached to the same electronics carrier (2).

6. The detection system of claim 5, wherein the first contact sensor (3) and the second contact sensor (4) are at a same side of the electronics carrier (2).

7. The detection system of claim 5, wherein the first contact sensor (3) and the second contact sensor (4) are at opposite sides of the electronics carrier (2).

8. The detection system of any of claims 1 - 7, further comprising a biasing element (22) between the first sensor actuator (5) and the second sensor actuator (6) configured to bias the first sensor actuator (5) and the second sensor actuator (6) towards the engaging element (8).

9. The detection system of any of the preceding claims, wherein the first contact sensor (3) and the second contact sensor (4) are potentiometers.

10. The detection system of claim 9, wherein the potentiometers are rotary potentiometers or linear potentiometers.

11. A gearshift device (11) comprising a detection system (1) according to any of claims 1 - 10 and comprising a gear selector operable by user to control a vehicle transmission, wherein the position selector (7) is the gear selector.

12. The gearshift device (11) of claim 11, further comprising an undulated surface defining one or more stable positions for the gear selector (7), and wherein a portion of the gear selector (7) engages with the undulated surface.

13. The gearshift device (11) of claim 11 or 12, wherein the gearshift device (11) is configured to determine a position of the gear selector based at least partially on an evolution of the position of the gear selector determined by one of the first (3) and second (4) contact sensors over time in case the other of the first (3) and second (4) contact sensors fails.

14. A vehicle comprising the gearshift device of claim 13.

## Patentansprüche

1. Erfassungssystem (1) zum Bestimmen einer Position eines Positionswählers (7) entlang eines ersten und eines zweiten Freiheitsgrades, umfassend:
mindestens einen Elektronikträger (2), wobei der mindestens eine Elektronikträger (2) eine Elektronikträger-Ebene definiert;
einen ersten Kontaktsensor (3) und einen zweiten Kontaktsensor (4), die an dem mindestens einen Elektronikträger (2) angebracht sind;
einen ersten Sensoraktuator (5), der einen Sensorabschnitt (9) umfasst, der in beweglichem Kontakt mit dem ersten Kontaktsensor (3) steht, so dass eine Bewegung des Sensorabschnitts (9) auf den ersten Kontaktsensor (3) übertragen wird, indem der Sensorabschnitt (9) des ersten Sensoraktuators (5) direkt oder indirekt einen Abschnitt des ersten Kontaktsensors (3) berührt und bewegt;
einen zweiten Sensoraktuator (6) mit einem Sensorabschnitt (10), der in beweglichem Kontakt mit dem zweiten Kontaktsensor (4) steht, so dass eine Bewegung des Sensorabschnitts (10) des zweiten Aktuators (6) auf den zweiten Kontaktsensor (4) übertragen wird, indem der Sensorabschnitt (10) des zweiten Aktuators (6) direkt oder indirekt einen Abschnitt des zweiten Kontaktsensors (4) berührt und bewegt; und
ein Betätigungselement (8), das so ausgebildet ist, dass es mit dem Positionswähler (7) verbunden werden kann, und das so ausgebildet ist, dass:
es sich auf die Elektronikträger-Ebene zu und von ihr weg bewegt und den ersten Sensoraktuator (5) sowie den zweiten Sensoraktuator (6) im Wesentlichen parallel zur Elektronikträger-Ebene bewegt, sodass eine Positionsänderung des Positionswählers (7) entlang der ersten Freiheitsgradrichtung erfasst werden kann; und ferner so konfiguriert, dass
es sich in einer Richtung parallel zur Elektronikträger-Ebene bewegt und den ersten Sensoraktuator (5) und den zweiten Sensoraktuator (6) im Wesentlichen parallel zur Elektronikträger-Ebene bewegt, so dass eine Positionsänderung des Positionswählers (7) entlang des zweiten Freiheitsgrades erfasst werden kann; und wobei das Betätigungselement so konfiguriert ist, dass es den ersten Sensoraktuator (5) und den zweiten Sensoraktuator (6) in entgegengesetzte Richtungen bewegt, wenn der Positionswähler (7) entlang des ersten Freiheitsgrades bewegt wird.

2. Erfassungssystem nach Anspruch 1, wobei das Betätigungselement (8) einen abgestuften Abschnitt (19) umfasst, der so konfiguriert ist, dass er den ersten Sensoraktuator (5) und den zweiten Sensoraktuator (6) in Richtung der Elektronikträger-Ebene betätigt, wenn sich das Betätigungselement (8) auf die Elektronikträger-Ebene zu oder von dieser weg bewegt.

3. Das Erfassungssystem nach Anspruch 1, wobei der erste Sensoraktuator (5) und der zweite Sensoraktuator (6) einen abgestuften Abschnitt aufweisen, der so konfiguriert ist, dass er vom Betätigungselement (8) betätigt wird, um den ersten Sensoraktuator (5) und den zweiten Sensoraktuator (6) in Richtung der Elektronikträger-Ebene zu bewegen, wenn das Betätigungselement (8) auf die Elektronikträger-Ebene zu oder von dieser weg bewegt wird.

4. Erfassungssystem nach einem der Ansprüche 1 bis 3, wobei das Betätigungselement (8) so ausgebildet ist, dass es den ersten Sensoraktuator (5) und den zweiten Sensoraktuator (6) in dieselbe Richtung bewegt, wenn der Positionswähler (7) entlang der zweiten Freiheitsachse bewegt wird.

5. Erfassungssystem nach einem der Ansprüche 1 bis 4, wobei der erste Kontaktsensor (3) und der zweite Kontaktsensor (4) an demselben Elektronikträger (2) angebracht sind.

6. Erfassungssystem nach Anspruch 5, wobei sich der erste Kontaktsensor (3) und der zweite Kontaktsensor (4) auf derselben Seite des Elektronikträgers (2) befinden.

7. Erfassungssystem nach Anspruch 5, wobei sich der erste Kontaktsensor (3) und der zweite Kontaktsensor (4) auf gegenüberliegenden Seiten des Elektronikträgers (2) befinden.

8. Erfassungssystem nach einem der Ansprüche 1 bis 7, das ferner ein Vorspannelement (22) zwischen dem ersten Sensoraktuator (5) und dem zweiten Sensoraktuator (6) umfasst, das so konfiguriert ist, dass es den ersten Sensoraktuator (5) und den zweiten Sensoraktuator (6) in Richtung des Betätigungselements (8) vorspannt.

9. Erfassungssystem nach einem der vorstehenden Ansprüche, wobei der erste Kontaktsensor (3) und der zweite Kontaktsensor (4) Potentiometer sind.

10. Erfassungssystem nach Anspruch 9, wobei die Potentiometer Drehpotentiometer oder Linearpotentiometer sind.

11. Eine Schaltvorrichtung (11), die ein Erfassungssystem (1) gemäß einem der Ansprüche 1 bis 10 umfasst und einen vom Benutzer betätigbaren Gangwähler zur Steuerung eines Fahrzeuggetriebes umfasst, wobei der Positionswähler (7) der Gangwähler ist.

12. Die Schaltvorrichtung (11) nach Anspruch 11, die ferner eine gewellte Oberfläche umfasst, die eine oder mehrere stabile Positionen für den Gangwähler (7) definiert, und wobei ein Abschnitt des Gangwählers (7) mit der gewellten Oberfläche in Eingriff steht.

13. Die Schaltvorrichtung (11) nach Anspruch 11 oder 12, wobei die Schaltvorrichtung (11) so konfiguriert ist, dass sie eine Position des Gangwählers zumindest teilweise auf der Grundlage einer zeitlichen Entwicklung der Position des Gangwählers bestimmt, die von einem der ersten (3) und zweiten (4) Kontaktsensoren erfasst wird, falls der andere der ersten (3) und zweiten (4) Kontaktsensoren ausfällt.

14. Ein Fahrzeug, das die Schaltvorrichtung nach Anspruch 13 umfasst.

## Revendications

1. Système de détection (1) destiné à déterminer la position d'un sélecteur de position (7) le long d'un premier et d'un deuxième degrés de liberté, comprenant :
au moins un support électronique (2), ledit au moins un support électronique (2) définissant un plan de support électronique ;
un premier capteur de contact (3) et un deuxième capteur de contact (4) fixés au support électronique (2) ;
un premier actionneur de capteur (5) comprenant une partie de capteur (9) en contact mobile avec le premier capteur de contact (3) de telle sorte qu'un mouvement de la partie de capteur (9) est transféré au premier capteur de contact (3) par la partie de capteur (9) du premier actionneur de capteur (5) entrant en contact directement ou indirectement avec une partie du premier capteur de contact (3) et la déplaçant ;
un deuxième actionneur de capteur (6) comportant une partie de capteur (10) en contact mobile avec le deuxième capteur de contact (4) de telle sorte qu'un mouvement de la partie de capteur (10) du deuxième actionneur (6) est transféré au deuxième capteur de contact (4) par la partie de capteur (10) du deuxième actionneur (6) entrant en contact directement ou indirectement avec une partie du deuxième capteur de contact (4) et la déplaçant ; et
un élément d'engagement (8) configuré pour être relié au sélecteur de position (7) et configuré pour :
se rapprocher et s'éloigner du plan du support électronique et déplacer le premier actionneur de capteur (5) et le deuxième actionneur de capteur (6) sensiblement parallèlement au plan du support électronique, de telle sorte qu'un changement de position du sélecteur de position (7) le long du premier degré de liberté puisse être détecté ; et configuré en outre pour
se déplacer dans une direction parallèle au plan du support électronique et déplacer le premier actionneur de capteur (5) et le deuxième actionneur de capteur (6) sensiblement parallèlement au plan du support électronique de manière à pouvoir détecter un changement de position du sélecteur de position (7) le long du deuxième degré de liberté ; et
dans lequel l'élément d'engagement est configuré pour déplacer le premier actionneur de capteur (5) et le deuxième actionneur de capteur (6) dans des directions opposées lorsque le sélecteur de position (7) est déplacé le long du premier degré de liberté.

2. Système de détection selon la revendication 1, dans lequel l'élément d'engagement (8) comprend une partie en gradins (19) configurée pour s'engager avec le premier actionneur de capteur (5) et le deuxième actionneur de capteur (6) dans une direction du plan du support électronique lorsque l'élément d'engagement (8) se déplace vers ou s'éloigne du plan du support électronique.

3. Système de détection selon la revendication 1, dans lequel le premier actionneur de capteur (5) et le deuxième actionneur de capteur (6) comprennent une partie en gradins configurée pour être engagée par l'élément d'engagement (8) afin de déplacer le premier actionneur de capteur (5) et le deuxième actionneur de capteur (6) dans une direction du plan du support électronique lorsque l'élément d'engagement (8) est déplacé vers ou à l'écart du plan du support électronique.

4. Système de détection selon l'une quelconque des revendications 1 à 3, dans lequel l'élément d'engagement (8) est configuré pour déplacer le premier actionneur de capteur (5) et le deuxième actionneur de capteur (6) dans une même direction lorsque le sélecteur de position (7) est déplacé selon le deuxième degré de liberté.

5. Système de détection selon l'une quelconque des revendications 1 à 4, dans lequel le premier capteur de contact (3) et le deuxième capteur de contact (4) sont fixés au même support électronique (2).

6. Système de détection selon la revendication 5, dans lequel le premier capteur de contact (3) et le deuxième capteur de contact (4) se trouvent du même côté du support électronique (2).

7. Système de détection selon la revendication 5, dans lequel le premier capteur de contact (3) et le deuxième capteur de contact (4) se trouvent sur des côtés opposés du support électronique (2).

8. Système de détection selon l'une quelconque des revendications 1 à 7, comprenant en outre un élément de sollicitation (22) entre le premier actionneur de capteur (5) et le deuxième actionneur de capteur (6), configuré pour solliciter le premier actionneur de capteur (5) et le deuxième actionneur de capteur (6) vers l'élément d'engagement (8).

9. Système de détection selon l'une quelconque des revendications précédentes, dans lequel le premier capteur de contact (3) et le deuxième capteur de contact (4) sont des potentiomètres.

10. Système de détection selon la revendication 9, dans lequel les potentiomètres sont des potentiomètres rotatifs ou des potentiomètres linéaires.

11. Dispositif de changement de vitesse (11) comprenant un système de détection (1) selon l'une quelconque des revendications 1 à 10 et comprenant un sélecteur de vitesse actionnable par l'utilisateur pour commander la transmission d'un véhicule, dans lequel le sélecteur de position (7) est le sélecteur de vitesse.

12. Dispositif de changement de vitesse (11) selon la revendication 11, comprenant en outre une surface ondulée définissant une ou plusieurs positions stables pour le sélecteur de vitesse (7), et dans lequel une partie du sélecteur de vitesse (7) vient en prise avec la surface ondulée.

13. Dispositif de changement de vitesse (11) selon la revendication 11 ou 12, dans lequel le dispositif de changement de vitesse (11) est configuré pour déterminer une position du sélecteur de vitesse en se basant au moins partiellement sur une évolution de la position du sélecteur de vitesse déterminée par l'un des premier (3) et deuxième (4) capteurs de contact au fil du temps au cas où l'autre des premier (3) et deuxième (4) capteurs de contact tomberait en panne.

14. Véhicule comprenant le dispositif de changement de vitesse selon la revendication 13.
